(19)

Europäisches
Patentamt
European
Patent Office
Office européen
des brevets

(11)    **EP 1 782 592 B1**

(12)    **EUROPEAN PATENT SPECIFICATION**

(45) Date of publication and mention
of the grant of the patent:
**06.10.2010 Bulletin 2010/40**

(51) Int Cl.:
*H04L 25/03* (2006.01)        *H04L 1/06* (2006.01)
*H04B 7/06* (2006.01)

(21) Application number: **05791647.0**

(22) Date of filing: **26.08.2005**

(86) International application number:
**PCT/US2005/030404**

(87) International publication number:
**WO 2006/026429 (09.03.2006 Gazette 2006/10)**

(54) **CODED-BIT SCRAMBLING FOR MULTI-STREAM COMMUNICATION IN A MIMO CHANNEL**

VERSCHLÜSSELUNG VON CODIERTEN BITS FÜR MEHRSTROMKOMMUNIKATION IN EINEM
MIMO-KANAL

CRYPTAGE BINAIRE CODE POUR UNE COMMUNICATION MULTI-FLUX DANS UN CANAL MIMO

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **27.08.2004  US 605183 P
30.09.2004  US 615567 P
08.10.2004  US 617502 P
25.08.2005  US 212239**

(43) Date of publication of application:
**09.05.2007  Bulletin 2007/19**

(73) Proprietor: **QUALCOMM INCORPORATED
San Diego, CA 92121 (US)**

(72) Inventor: **KIM, Byoung-Hoon
San Diego, California 92122 (US)**

(74) Representative: **Carstens, Dirk Wilhelm
Wagner & Geyer
Gewürzmühlstrasse 5
80538 München (DE)**

(56) References cited:
**WO-A-03/085875        WO-A-2004/038951
WO-A-2004/039011      US-A1- 2003 021 355**

EP 1 782 592 B1

**Description**

**BACKGROUND**

**Field**

The present invention relates generally to wireless communications, and more specifically to multi-stream transmission in a multiple input-multiple output (MIMO) channel in a wireless communication system.

**Background**

The recent success of multiple-input-multiple-output (MIMO) antenna systems in wireless channels is at least partially due to the fact that they can achieve a linear growth of capacity in proportion to the number of transmit and receive antennas. For multiple stream transmission in a multiple input-multiple output (MIMO) code division multiple access (CDMA) system, either multiple distinct Walsh codes or the same Walsh code is generally allocated for the multiple streams. One code allocation strategy is to start with separate Walsh code allocation and then increasingly share the codes as the data rate or the number of required codes for each stream is increased. However, eventually, the same codes for all the streams will be allocated in order to achieve the ultimate capacity that a MIMO system can provide. In a narrow-band MIMO system, where bandwidth expansion is not allowed, the multiple streams are generally transmitted without any channel separation through Walsh code covering.

Depending on the movement of the mobile station, the channel coefficient vectors of each data stream in the MIMO system will have various instantaneous realizations. The coefficient vectors may be nearly orthogonal to each other at one instant while they may have very close values or high instantaneous correlation next. When the channel coefficient vectors of the multiple streams become close, each of the streams interferes with the other streams. In the extreme case, when the channel coefficient vectors of multiple streams take nearly the same values, the decoder of each stream suffers from the competitive decoding path metrics between the desired stream and the interfering streams. This extreme case may often occur if the mobile station sees a strong line-of-sight (LOS) signal from the base station, where the MIMO channel becomes close to an AWGN matrix channel or a Ricean matrix channel with a high Ricean factor. There is therefore a need in the art for systems and methods of communication to overcome these problems.

Further attention is drawn to the document US 2003/021355, which discloses a signal transmitting and receiving method and system in a mobile communication system provided with a plurality of antennas. The signal transmitting method in the mobile communication system that transmits a signal through a plurality of antennas includes separating by layers and primarily encoding input data for an independent signal generation interleaving in space and time the primarily encoded data of the respective layers, receiving and secondarily encoding the interleaved data, and transmitting the secondarily encoded data through the plurality of antennas.

Also attention is drawn to the document WO 2004/038951, which describes techniques for facilitating random access in wireless multiple-access communication systems. A random access channel (RACH) is defined to comprise a "fast" RACH (F-RACH) and a "slow" RACH (S-RACH). The F-RACH and S-RACH can efficiently support user terminals in different operating states and employ different designs. The F-RACH can be used to quickly access the system, and the S-RACH is more robust and can support user terminals in various operating states and conditions. The F-RACH may be used by user terminals that have registered with the system and can compensate for their round trip delays (RTDs) by properly advancing their transmit timing. The S-RACH may be used by user terminals that may or may not have registered with the system, and may or may not be able to compensate for their RTDs. The user terminals may use the F-RACH or S-RACH, or both, to gain access to the system.

Furthermore attention is drawn to the document WO 2004/039011, which describes a multiple-access MIMO WLAN system that employs MIMO, OFDM, and TDD. The system (1) uses a channel structure with a number of configurable transport channels, (2) supports multiple rates and transmission modes, which are configurable based on channel conditions and user terminal capabilities, (3) employs a pilot structure with several types of pilot (e.g., beacon, MIMO, steered reference, and carrier pilots) for different functions, (4) implements rate, timing, and power control loops for proper system operation, and (5) employs random access for system access by the user terminals, fast acknowledgment, and quick resource assignments.

Finally, attention is drawn to the document WO 03/085875, which describes that a space-time encoding mode is selected for use when transmitting with spatial diversity based on the receive diversity associated with a receiver device and the quality of the transmission channels based on information fed back from the receiver device. The selectable space-time encoding modes are preferably space-time transmit diversity encoding and a version of BLAST-type encoding. Further, modulation modes, error encoding rates, or a combination thereof, may also be based on the quality of the transmission channels and the available diversity of the receiver device.

## EP 1 782 592 B1

SUMMARY OF THE INVENTION

In accordance with the present invention an apparatus, as set forth in claims 1, 12, 13 and 18, and a method as set forth in claims 19, 30, 31 and 36, are provided. Embodiments of the invention are claimed in the dependent claims.

Embodiments disclosed herein address the above-stated needs by scrambling the coded bits of each stream to prevent degenerative decoding performance of the MIMO system when the channel coefficient vectors of multiple streams become relatively close or correlated. In one embodiment, distinct scrambling codes are multiplied to the coded bit of each stream to prevent degenerative decoding performance of a MIMO system when the channel coefficient vectors of multiple streams become close or correlated. This converts competing codewords of an interfering stream into invalid random words from the view point of the decoder of the desired stream. One embodiment provides scrambling and descrambling of each stream.

By scrambling (generally occurring at the transmitter) and descrambling (generally occurring at the receiver) of coded bits of each stream, the decoder of each stream avoids codeword collisions. During descrambling, potentially competing codeword of the interfering stream loses legitimacy as a candidate codeword and is converted into a benign random word. In many cases, the random word does not generate a competing path metric for a hypothetical candidate codeword in the decoder. The effect of the distinct interleaving pattern or distinct puncturing and repetition pattern (e.g., redundancy version) is similar to the distinct scrambling.

One embodiment includes an apparatus that comprises an encoder for encoding a plurality of source bit streams to produce a plurality of encoded bit streams, a bit stream processor for scrambling each of said encoded bit streams with a differently configured scrambler to produce a plurality of differently scrambled bit streams, and a mapper for mapping groups of bits of said plurality of differently scrambled bit streams into transmit symbols.

Another embodiment includes an apparatus that comprises an encoder for encoding a plurality of source bit streams to produce a plurality of encoded bit streams, a bit stream processor for interleaving each of the encoded bit streams with a different interleaving pattern to produce a plurality of differently interleaved bit streams, and a mapper for mapping groups of bits of said plurality of differently interleaved bit streams into transmit symbols.

Another embodiment includes an apparatus that comprises an encoder for encoding a plurality of source bit streams to produce a plurality of encoded bit streams, a bit stream processor for rate matching each of the encoded bit streams with a different puncturing or repetition pattern on each encoded bit stream to produce a plurality of different bit streams, and a mapper for mapping groups of bits of said plurality of different bit streams into transmit symbols.

Another embodiment includes an apparatus that comprises a demapper for translating received symbols into bit groups and to produce a plurality of received bit streams, a bit stream processor for applying a different descrambling algorithm to each received bit stream to produce a plurality of differently descrambled bit streams, and a decoder for decoding said differently descrambled bit streams to produce a plurality decoded bit streams.

Another embodiment includes an apparatus that comprises a demapper for translating received symbols into bit groups and to produce a plurality of received bit streams, a bit stream processor for applying a different deinterleaving pattern to each received bit stream to produce a plurality of differently deinterleaved bit streams, and a decoder for decoding said differently deinterleaved bit streams to produce a plurality decoded bit streams.

Another embodiment includes an apparatus that comprises a demapper for translating received symbols into bit groups and to produce a plurality of received bit streams, a bit stream processor for applying a different depuncturing pattern to each received bit stream to produce a plurality of differently depunctured bit streams, and a decoder for decoding said differently depunctured bit streams to produce a plurality decoded bit streams.

Another embodiment includes a method for transmission of information in a multiple input-multiple output communication system. The method comprises encoding a plurality of source bit streams to produce a plurality of encoded bit streams, scrambling each of said encoded bit streams with a differently configured scrambler to produce a plurality of differently scrambled bit streams, and mapping groups of bits of said plurality of differently scrambled bit streams into transmit symbols.

Another embodiment includes a method for transmission of information in a multiple input-multiple output communication system. The method comprises encoding a plurality of source bit streams to produce a plurality of encoded bit streams, interleaving each of the encoded bit streams with a different interleaving pattern to produce a plurality of differently interleaved bit streams, and mapping groups of bits of said plurality of differently interleaved bit streams into transmit symbols.

Another embodiment includes a method for transmission of information in a multiple input-multiple output communication system. The method comprises encoding a plurality of source bit streams to produce a plurality of encoded bit streams, rate matching each of the encoded bit streams with a different puncturing or repetition pattern on each encoded bit stream to produce a plurality of different bit streams, and mapping groups of bits of said plurality of different bit streams into transmit symbols.

Another embodiment includes a method for receiving information in a communication device. The method comprises translating received symbols into bit groups and to produce a plurality of received bit streams, applying a different descrambling algorithm to each received bit stream to produce a plurality of differently descrambled bit streams, and decoding said differently descrambled bit streams to produce a plurality decoded bit streams.

Another embodiment includes a method for receiving information in a communication device. The method comprises translating received symbols into bit groups and producing a plurality of received bit streams, applying a different deinterleaving pattern to each received bit stream to produce a plurality of differently deinterleaved bit streams, and decoding said differently deinterleaved bit streams to produce a plurality decoded bit streams.

Another embodiment includes a method for receiving information in a communication device. The method comprises translating received symbols into bit groups and producing a plurality of received bit streams, applying a different depuncturing pattern to each received bit stream to produce a plurality of differently depunctured bit streams, and decoding said differently depunctured bit streams to produce a plurality decoded bit streams.

## BRIEF DESCRIPTION OF THE DRAWINGS

Figure 1A is a block diagram of one embodiment of an individual encoding and spatial multiplexing based MIMO multi-code CDMA system;

Figure 1B is a block diagram of another embodiment of an individual encoding and spatial multiplexing based MIMO multi-code CDMA system;

Figure 1C is a block diagram of one embodiment of an individual encoding and spatial multiplexing based MIMO OFDM system;

Figure 2 is a graph of throughput performance vs. pT for a 2x2 MIMO systems, where Ec = Ior = -3 dB and pR = 0;

Figure 3 is a graph of FER performance vs. Ec/Ior with variation of pT for a 4x4 MIMO systems, where G = 10 dB and pR = 0;

Figure 4 is a graph of FER performance vs. Ec/Ior with variation of pR for a 4x4 MIMO systems, where G = 10 dB and pT = 0;

Figure 5 is a graph of FER performance vs. effective code rate for a 4x4 MIMO systems, where G =10 dB, Ec = Ior = -3 dB, and pR = 0;

Figure 6 is a flow chart of a method of transmitting information in a multi-input/multi-output system; and

Figure 7 is a flow chart of a method of receiving information in a multi-input/multi-output system.

## DETAILED DESCRIPTION

In one embodiment, codewords of parallel data streams that are transmitted through multiple antennas in a multiple-input-multiple-output (MINIO) wireless channel are independently processed, scrambled, or randomized. When channel coefficient vectors of two or more parallel streams become close or correlated, this codeword scrambling converts possibly competing codewords of interfering streams into invalid random words from the viewpoint of the decoder of the desired stream. As explained further below, codeword scrambling also provides effective interference variance reduction when the code rate is low enough to use repetition rate matching after a baseline channel encoding. The scrambling improves decoding performance, especially when the MIMO channel is highly correlated in the transmitter side or when the repetition rate is high.

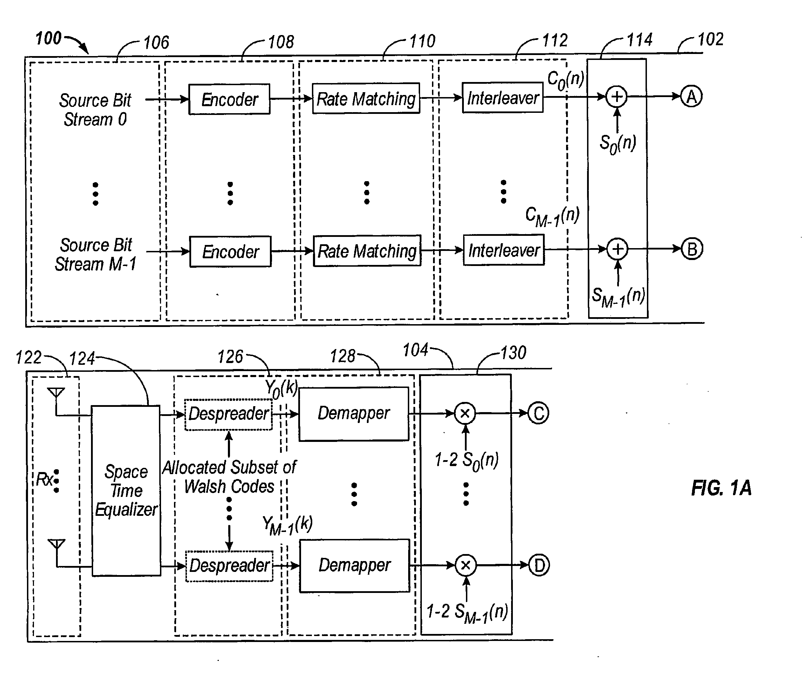

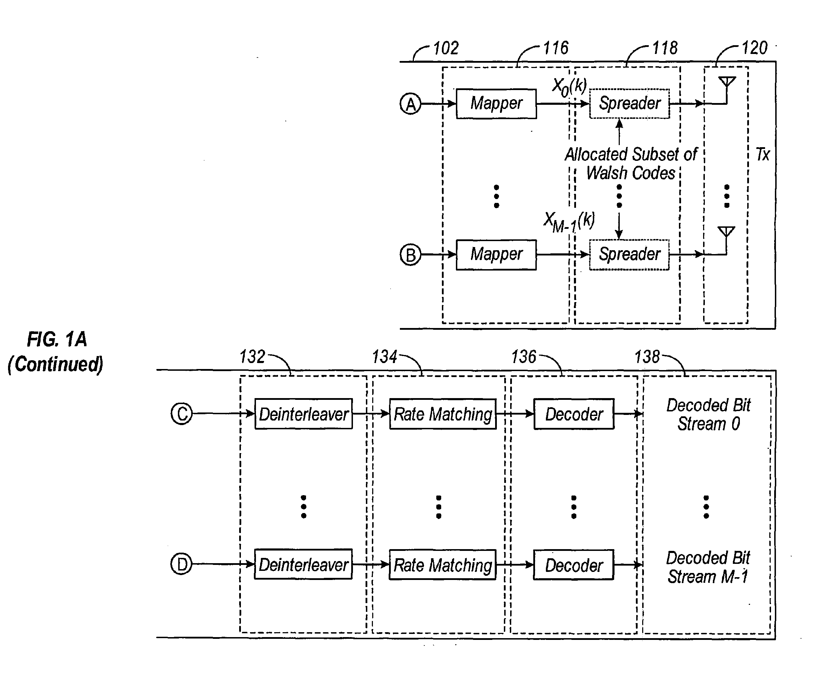

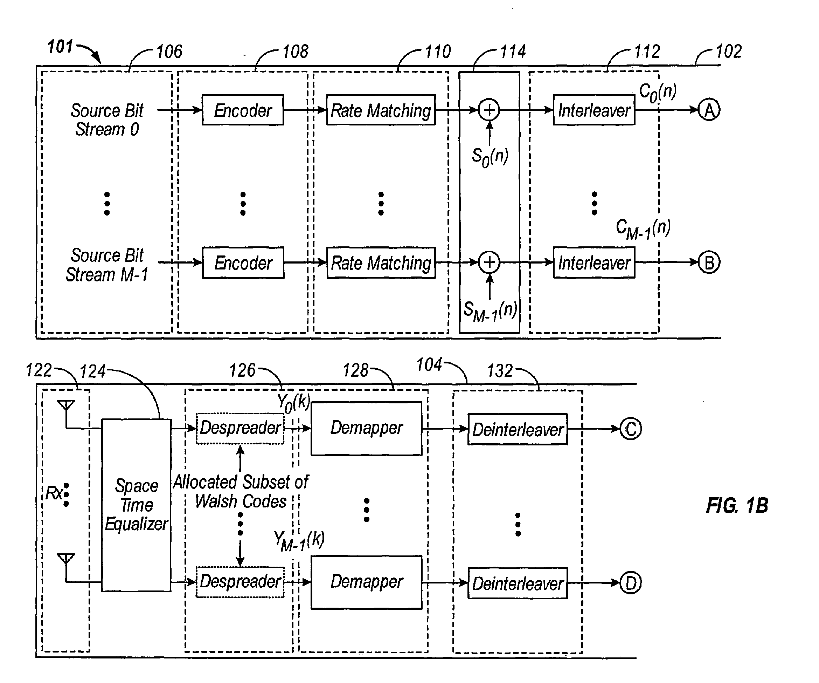

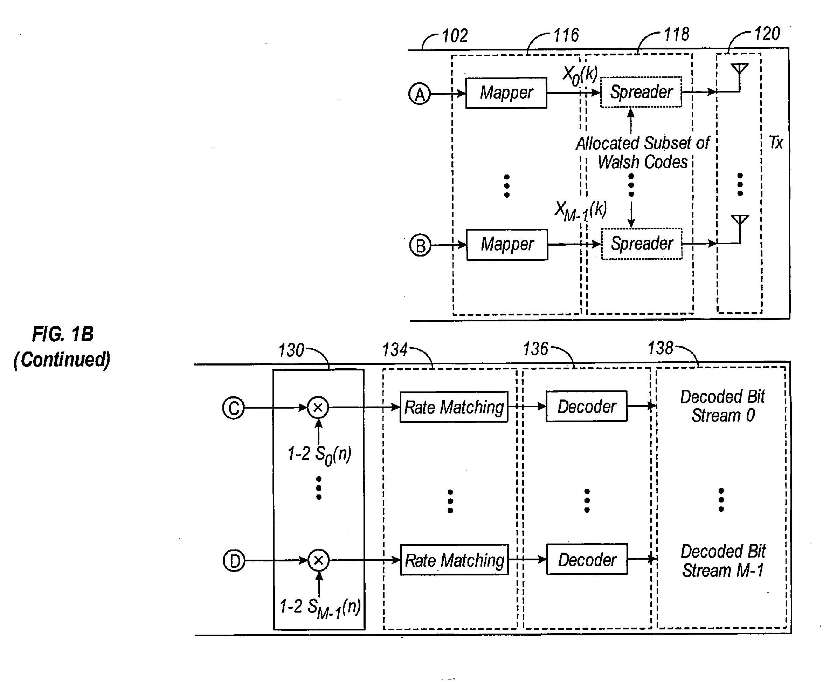

Figure 1A and Figure 1B are simplified block diagrams of individual encoding based MIMO multi-code CDMA systems 100, 101. Although the discussion herein is primarily directed to a multi-code CDMA system, it should be understood that the entire discussions and performance results are also applicable to general MIMO transceivers. For example, by removing the spreader and despreader functional blocks in Figure 1A or Figure 1B, the system apparatus and methods discussed herein is applicable to narrow-band transmission systems, such as Global System for Mobile Communication (GSM) and Time Division Multiple Access (TDMA) systems.

In the illustrated embodiment of Figure 1A, the MIMO system 100 includes a transmitter 102 and a receiver 104. A total of M source bit streams 106 are provided to an encoder 108. The encoder 108 provides the input to a rate matcher 110. The output of the rate matcher 110 is directed to interleaver 112, which provides the input to a scrambler 114. A mapper 116 is coupled to the outputs of the scrambler 114, and provides the input to a spreader 118. The mapper groups bits of the bit streams onto transmission symbols for a predetermined modulation type. The output of the spreader 118 is directed to transmit antennas 120.

In an alternative embodiment illustrated in Figure 1B, a MIMO system 101 also includes a transmitter 102 and a receiver 104. A total of M source bit streams 106 are provided to an encoder 108, and the encoder 108 provides the input to a rate matcher 110, as in the embodiment of Figure 1A. However, in the embodiment of Figure 1B, the output of the rate matcher 110 is provided to the scrambler 114, which provides the input to the interleaver 112. The output of the interleaver 112 is directed to the mapper 116, which provides the input to a spreader 118. As in Figure 1A, the output of the spreader 118 is directed to transmit antennas 120.

Each of the individual functional blocks in the block diagrams of Figures 1A-1C are well known to those in the art, and the details of their construction and functionality is not further described in detail herein. An encoder translates a bit stream into a different bit stream, with the usual object being to convert the originals bit stream into a different one having characteristics that are more desirable for transmission or storage than the original bit stream. Encoders can generally be implemented in software or hardware. On the transmit side, the rate matcher 110, interleaver 112, and scrambler 114 together form a bit stream processing circuit that operates on the encoded bit stream from the encoder 108. Bit stream puncturing and repetition for rate matching is well known, as is bit stream re-arrangement through interleaving in transmission systems. Scrambler function and design is also well known in a variety of applications. It is one aspect of the invention that the bit stream processing performed between the encoder and the mapper is performed in a different way on each of the plurality of bit streams exiting the encoder. The interleaver output for each bit stream is a series of bit groups referred to herein as codewords that depend on the content of the encoder input bit stream. Because the interleaver output typically contains more bits than the encoder input, not all arbitrary outputs are possible at all times. As used herein, a "valid" codeword or "legitimate" codeword is an output codeword that is within the set of possible output codewords that could be produced by the concatenated processing circuits of encoder, rate-matcher, and interleaver. An "invalid" codeword is a codeword that is outside this set.

Referring back to Figure 1A, communication signals are emitted from the transmit antennas 120, and are received by receive antennas 122 of another MIMO system 100. The receive antennas 122 are coupled to a space-time equalizer 124, which provides the input to a despreader 126. The despreader 126 is coupled to a demapper 128, which is coupled to a descrambler 130. The descrambler 130 has outputs that are coupled to a deinterleaver 132. The deinterleaver 132 is coupled to a rate matcher 134, which provides the input to a decoder 136. The output of the decoder 136 includes M decoded bit streams 138, referenced herein as bit streams 0 through M-1.

In the embodiment of Figure 1B, communication signals are emitted from the transmit antennas 120, and are received by receive antennas 122, as in the embodiment of Figure 1A. The receive antennas 122 are coupled to a space-time equalizer 124, which provides the input to a despreader 126. The despreader 126 is coupled to a demapper 128, which is coupled to a deinterleaver 132. The deinterleaver 132 has outputs that are coupled to a descrambler 130. The descrambler 130 is coupled to a rate matcher 134, which provides the input to a decoder 136. The output of the decoder 136 includes M decoded bit streams 138, referenced herein as bit streams 0 through M-1.

In either CDMA system 100, 101, the M information bit streams 106 are independently encoded by the encoders 108, repeated or punctured by the rate matchers 110 to match the transmit symbol rate, and interleaved by the interleavers 112 within the frame interval. Each interleaved bit sequence is grouped and mapped by the mappers 116 to the sequence of transmit symbols or constellation points depending upon by the modulation type (e.g., QPSK or 16QAM), spread by the common subset of available Walsh codes and the transmitter-specific chip-scrambling code by the spreaders 118, and then transmitted through each transmit antenna 120. Although the decoding error rate can be reduced by allocating different subsets of Walsh codes to the different transmit antennas 120 whenever they are available, in this embodiment the common subset of Walsh codes is reused for at least a part of multiple transmit antennas 120.

The total transmit power is divided and allocated to each transmit antenna 120. The transmitted multiple streams arrive at the N receive antennas 122 after being distorted by a MIMO fading channel and an additive white Gaussian noise (AWGN) vector. Assume that $N \geq M$ and the time-varying MIMO channel has a flat fading characteristic for simplicity, but they can easily be extended to the cases of $N < M$ and frequency-selective fading channels. The channel variation is relatively small within the transmission frame duration. The space-time equalizer 124 generates the soft chip sequences of the M transmit streams and the despreader 126 generates the corresponding soft symbol sequences. Using the soft symbols, the demapper 128 generates the bit log-likelihood ratio (LLR) sequences, which are fed to the individual chains of deinterleaver 132, rate matchers 134, and decoder 136 to restore the multiple source streams 106.

The $N \times M$ fading channel matrix is referred to as $H \equiv [\ h_0, h_1, ..., h_{M-1}\ ]$, the $M \times 1$ transmit symbol vector as $x(k) \equiv [\ x_0(k), x_1(k), ..., x_{M-1}(k)\ ]^T$, and the $N \times 1$ AWGN vector obtained after despreading (without multiplication of space-time equalizer coefficients) as $n(k) \equiv [\ n_0(k), n_1(k), ..., n_{N-1}(k)\ ]^T$ for the symbol time index k. The vector $h_i$ is the $N \times 1$ channel coefficient vector associated with the transmit symbol $x_i(k)$. The demapper input soft symbol $y_i(k)$ corresponding to the i-th data stream is represented as:

$$y_i(k) \;=\; w_i^H Hx(k) + w_i^H n(k) \tag{1}$$

$$=\; \sum_{j=0}^{M-1} w_i^H h_j x_j(k) + w_i^H n(k) \tag{2}$$

$$=\; \sum_{j=0}^{M-1} a_{ij} x_j(k) + v_i(k) \quad i = 0,1,\cdots,M-1 \tag{3}$$

where the N × 1 vector $\mathbf{w}_i$ denotes the $i$-th weighting coefficient vector of the space-time equalizer, $a_{ij} \equiv w_i^H h_j$ and $v_i(k) \equiv w_i^H n(k)$. Using a linear maximum signal-to-interference-noise-ratio (MSINR) space-time equalizer, the $i$-th weighting vector takes the value of:

$$w_i = [\sum_{j=0,j\neq i}^{M-1} E_s h_j h_j^H + N_o I]^{-1} h_i \tag{4}$$

for the average modulation symbol energy $E_s$ and the noise variance $N_o$, and the resulting symbol SINR becomes:

$$SINR_i = E_s h_i^H [\sum_{j=0,j\neq i}^{M-1} E_s h_j h_j^H + N_o I]^{-1} h_i. \tag{5}$$

When the constellation size is $2^B$, the demapper 128 generates the LLR $\Lambda_i^l(k)$ of the $l$-th bit $b_i^l(k)$ ($l$ = 0, 1, ..., B-1) associated with the observed soft symbol $y_i(k)$ by taking

$$\Lambda_i^l(k) = \log \frac{p(b_i^l(k) = 0 | y_i(k))}{p(b_i^l(k) = 1 | y_i(k))} \tag{6}$$

for the conditional probability density function of $\alpha$ given $\beta$, $p(\alpha|\beta)$. $\Lambda_i^l(k)$ is calculated under the assumption of an equal *a priori* probability for each constellation point and via a Gaussian approximation of the noise and interference components of $y_i(k)$.

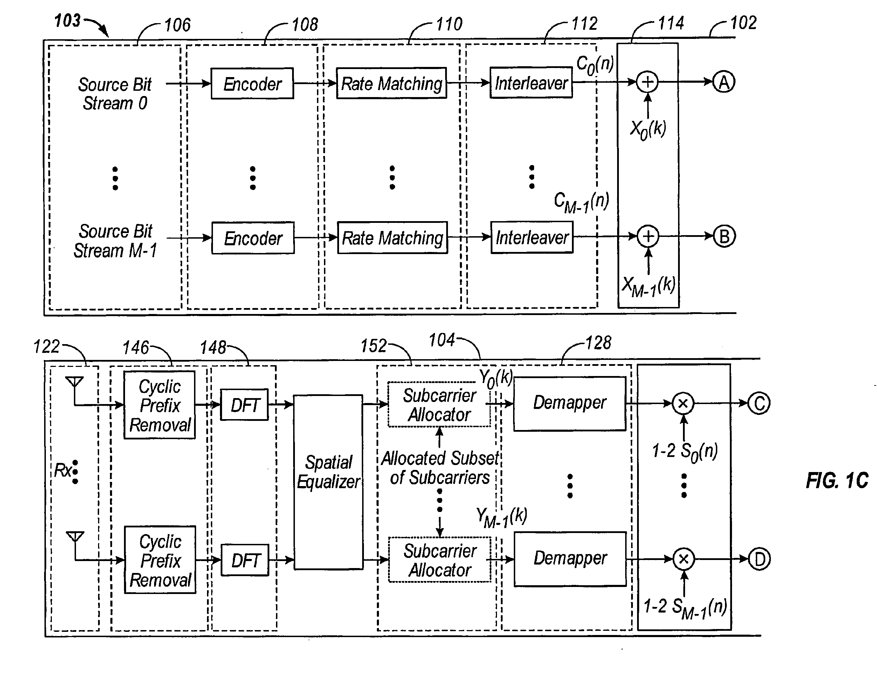

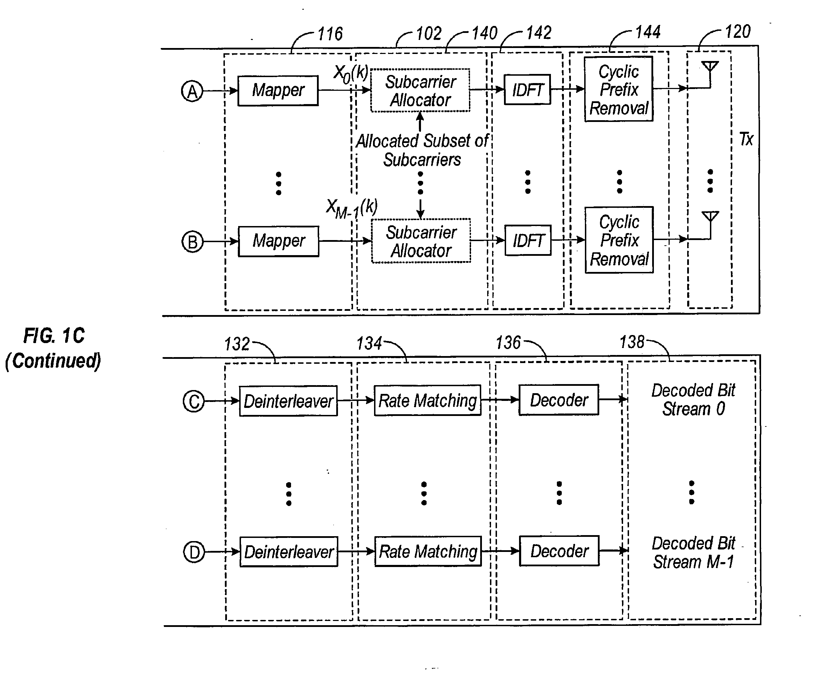

It will be appreciated by those of skill in the art that the foregoing may be applied to a variety of communication systems, including an orthogonal frequency-division multiplexing (OFDM) system, such as the OFDM system 103 illustrated in Figure 1C. The OFDM system 103 includes a transmitter 102 and a receiver 104. The receiver 102 of the illustrated OFDM system 103 includes many of the same components of a CDMA system, such as the CDMA systems 100, 101 described above. For example, the OFDM system 103 includes M source bit streams 106 that are provided to an encoder 108. The output of the encoder 108 is directed to a rate matcher 110, which is coupled to the input of an interleaver 112. The interleaver 112 output is directed to a scrambler 114, which is coupled to the input of a mapper 116. It will be appreciated that in this OFDM embodiment, the scrambler can be placed between the rate-matcher and the interleaver in the transmitter and between the deinterleaver and the rate matcher in the receiver as also shown in the CDMA embodiment of Figure 1B.

However, in the OFDM system 103, the output of the mapper 116 is directed to a subcarrier allocator 140, which receives an allocated subset of subcarriers. The output of the subcarrier allocator 140 is coupled to the input of an inverse discrete Fourier transformer (IDFT) 142. The IDFT 142 is coupled to a cyclic prefix inserter 144, which has outputs coupled to m transmit antennas 120.

The OFDM system 103 receives information with M antennas 122, which are coupled to the input of a cyclic prefix remover 146. The output of the cyclic prefix remover 146 is coupled to a discrete Fourier transformer 148, which is coupled to a spatial equalizer 150. The output of the spatial equalizer 150 is coupled to a subcarrier selector 152, which receives an allocated set of subcarriers. The output of the subcarrier selector 152 is coupled to a demapper 128, descrambler 130, deinterleaver 132, rate matcher 134, and decoder 136 as in either of the CDMA system embodiments 100, 101, described above.

The scramblers and descramblers of Figures 1A-1C improve decoding performance when it is adversely affected by the correlation among the column or row vectors of the instantaneous channel matrix.

Degenerative interference occurs when the data rate of the first two streams is equal and the first two column vectors of the channel matrix are close each other, e.g., $h0 \approx h1$. When decoding the first stream $\{x0(k)\}$, the demapper input soft symbol corresponding to the first stream becomes:

$$y_0(k) \approx a_{00}[x_0(k) + x_1(k)] + \sum_{j=2}^{M-1} a_{0j} x_j(k) + v_0(k). \qquad (7)$$

The channel decoder 136 of the first stream calculates the path metrics of the legitimate candidate codewords (after deinterleaving and rate matching) by accumulating the bit LLR values generated on the basis of the observation sequence $\{y0(k)\}$, and compares them to determine the transmitted information bits of the first stream. As the coded (and rate-matched and interleaved) bit sequence of the second stream $\{x1(k)\}$ is also one of the legitimate candidate codewords for the first stream decoding and yields a comparable path metric value, the decoder of the first stream could perform an incorrect sequence detection, at least with a probability of 0.5. That is, the decoder 136 for the first stream could decode the second stream rather than the first stream when the corresponding channel column vectors are close. If more than two channel coefficient vectors were highly correlated, the wrong sequence detection probability would increase further. The transmitter 102 is likely to select the same transmit rate or transmit format for the first and the second streams, even when the transmitter 102 adaptively adjusts the data rate of each stream depending on the channel status, since the feedback SINR reported from the receiver is almost the same for the two streams when the two channel coefficient vectors are relatively close.

The selection of the same transmit format for the two streams unfortunately legitimates the coded bit sequence of the second stream as a competing candidate codeword in decoding the first stream, and vice versa. If the receiver 104 transmits the correlation information of the channel coefficient vectors as well as the SINR of each stream to the transmitter 102, one can selectively activate and deactivate streams to avoid this collision. However, doing so will increase the amount of feedback information and will suffer from measurement and feedback delay.

The codeword competition problem occurs more frequently when the transmit antennas 120 are more correlated, as it will increase the probability that the multiple column vectors of the channel matrix become instantaneously close. In order to prevent the codeword competition among multiple streams when the channel column vectors are instantaneously close, in one embodiment, such as that illustrated in Figure 1, an exclusive-OR (XOR) operation is provided between the i-th binary pseudo random (PN) scrambling sequence $\{si(n)\}$ and the i-th coded bit sequence $\{ci(n)\}$ at the output of the interleaver 112 in the transmitter side, where n denotes the time index of the coded, rate-matched and interleaved bit sequence. Using the notations k,1, B, and $b_i^l(k)$ of Eq. (6), then relations n = kB + 1 and

$b_i^l(k)$ = ci(n) ⊕ si(n), where ⊕ denotes the exclusive-OR operation between binary values.

The scrambling sequences for the multiple streams are advantageously independent of one another. In the receiver side, the bit LLR sequence of the i-th stream is multiplied by the i-th real-valued descrambling sequence $\{1 - 2si(n)\}$ to undo the effect of the i-th scrambling sequence. By using the independent scrambling sequences for the parallel streams, the competing codeword coming from the interference stream whose channel coefficient vector is close to that of the desired stream mostly turns into a random word through the scrambling and descrambling process. Therefore, the decoder 136 of the desired stream (e.g., $\{x0(k)\}$ in Eq.(7)) will not select the codeword of the interference stream (e.g., $\{x1(k)\}$ in Eq.(7)). As the effective code rate defined by the ratio of the number of information bits to the number of the coded, rate-matched and interleaved bits gets lower, the probability that the resulting random word is a legitimate codeword or is close to a codeword becomes lower. Figures 1A-1C show the coded bit scrambler CBS 114 in the transmitter 102 and the corresponding descrambler 130 in the receiver 104.

There are a variety of implemental variations to achieve a similar effect, including using distinct bit level channel interleaver patterns for parallel streams, or distinct puncturing and repetition patterns in the rate matching may be used for the parallel streams. In these embodiments, no separate scrambler is necessarily required.

The scrambler 114 provides another benefit for the multi-stream transmission in quasi-static MIMO channels. Depending on the effective code rate, the rate matcher 110 repeats or punctures the channel coder 108 output bits. The scrambler 114 applied at the output of the interleaver 112 or the rate matcher 110 yields a significant improvement of codeword SINR when the repetition rate matching occurs. For example, if the code rate of the baseline channel encoder 108 is 1/3 and the effective code rate happens to be 1/6 for the first stream and the second stream, the rate matcher 110 repeats the encoder 108 output bits of the two streams 106 once again.

When the channel decoder 136 (combined with the rate matcher 134) of the first stream accumulates branch metrics to generate the path metrics of the candidate codewords, the interference components corresponding to the repeated bit pairs of the second stream are accumulated with their phases aligned. By the independent scrambling of the rate-matched bit sequences, the repeated interference components are accumulated with their phases randomized when the repeated signal components are coherently accumulated, and thus, the interference variances of the path metrics are reduced. This interference variance reduction is effective in most channel realizations unless the channel column vectors are perfectly orthogonal.

In order to evaluate the gain from coded bit scrambling (CBS) in the MIMO system 100, link throughput and the frame error rate (FER) of the fixed data rate WCDMA HSDPA system were compared with multiple antennas and a linear MSINR space-time equalizer. In the HSDPA, the data streams are spread by multiple Walsh codes whose spreading factor is 16 (at the chip rate of 3.84 Mcps) and the maximum number of Walsh codes available for data transmission is 15. The simulations below reused a fixed subset of the available Walsh codes to transmit multiple streams. A turbo coder was used with the baseline code rate of 1/3 and applied rate matching, interleaving, and constellation mapping. The number of modulation symbols transmitted per Walsh code in a frame was 480 and the frame duration was 2 ms (7680 chips). For the MIMO channel, the correlated Rayleigh fading channel H(t) is, for example, generated by:

$$H(t) = C_R^{1/2} H_0(t) C_T^{1/2} \qquad (8)$$

where $\mathbf{C}_R$ and $\mathbf{C}_T$ are the correlation matrices of the transmit and the receive antennas whose diagonal elements are equal to 1.0 and the elements of $\mathbf{H}_o(t)$ are independent complex Gaussian random processes, with $t$ being the time index. For simplicity, the off-diagonal elements of $\mathbf{C}_R$ and $\mathbf{C}_T$ were set to the real correlation coefficients $\rho_R$ and $\rho_T$ ranging from 0.0 to 1.0. The simulations use a 30 kn/h single path Rayleigh fading process for each element of $\mathbf{H}_o(t)$ with the carrier frequency of 2 GHz and assumed the perfect channel and noise variance estimation for the space-time equalizer.

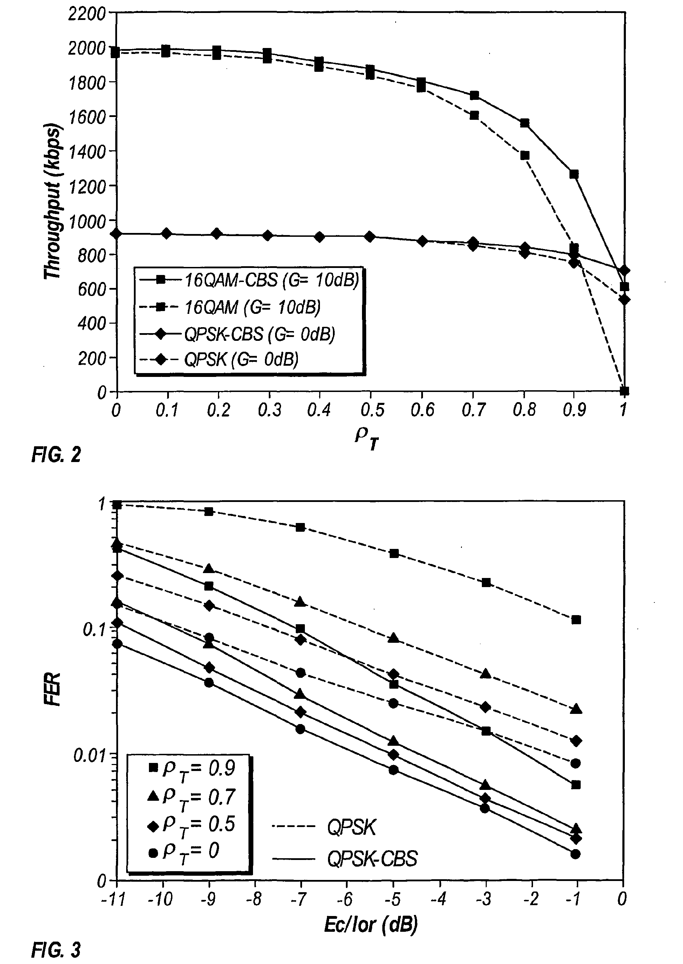

Figure 2 is a graph of the link throughput of the MIMO systems with two transmit and two receive antennas for the QPSK and the 16QAM constellations. In Figure 2, 16QAM-CBS or QPSK-CBS indicates the case where the CBS was applied to the parallel transmit streams. Each antenna stream was transmitted at a fixed rate of 1,250 source bits per frame for the QPSK (e.g., 1.25 Mbps target sum rate) and 2,500 source bits per frame for the 16QAM (e.g., 2.5 Mbps target sum rate). The number of allocated Walsh codes was 4 and thus, the effective code rate is about 1/3 for both the constellations, which is equal to the baseline code rate of the turbo encoder. The hybrid automatic repeat request (HARQ) was based on a chase combining of a maximum of 4 retransmissions. The simulation interlaced 6 independent HARQ processes of stop-and-wait type across time with the transmission time interval of each process being 6 frames (e.g., 100% channel utilization). The transmit power portion allocated to the data traffic Ec/Ior was fixed to 50% (e.g., -3dB) of the total transmit power and the geometry value G defined by the ratio of the total received signal power to the total AWGN power was set to 0 dB for the QPSK and 10 dB for the 16QAM, respectively. Figure 2 shows the aggregate throughput summed over the two transmit streams varied pT from 0 to 1, with pR being 0. When pT gets greater than 0.7, CBS improves the throughput performance substantially. When pT is 1.0, a conventional 16QAM MIMO system cannot communicate, but the CBS-based system can still convey a substantial amount of information. The throughput gain of the CBS-based system originates from the effect of the interference variance reduction during the chase combining, as well as the prevention of the codeword competition between streams.

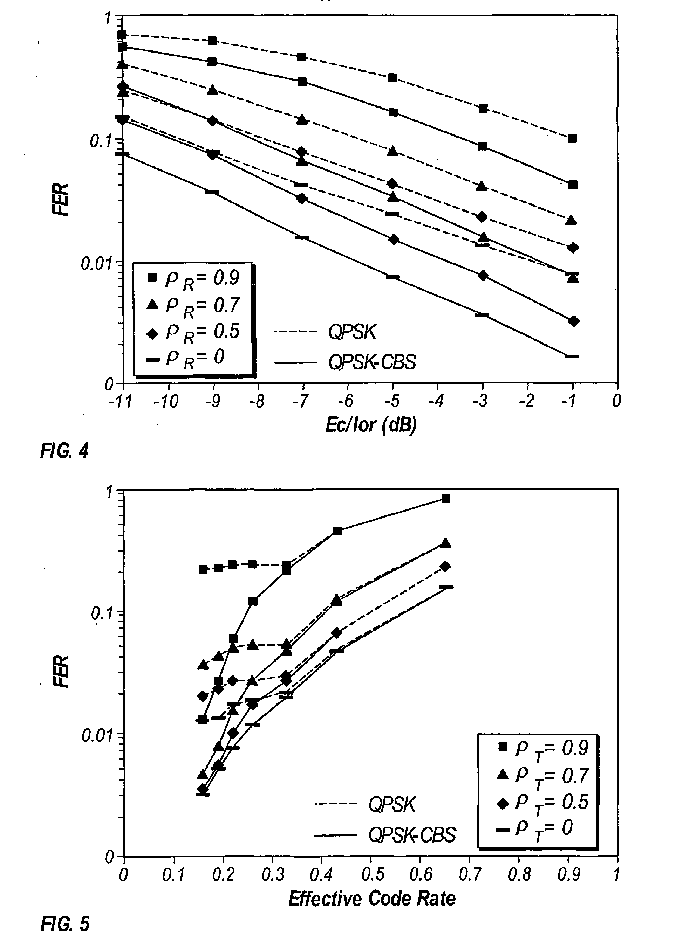

Figures 3-4 compare the FER of the MIMO systems with four transmit and four receive antennas as Ec/Ior is varied. The geometry value G is set to 10 dB. In Figure 3, pT is changed while pR is held at 0. In Figure 4, pR is changed while pT is held at 0. Each of the four antenna streams continuously transmit at a fixed rate of 1,250 source bits per frame (e.g., 2.5 Mbps target sum rate) using the QPSK constellation. The number of allocated Walsh codes is 8 and thus, the effective code rate is about 1/6. As a result, the rate matching block repeats most of the encoder output bits twice. Due to the interstream interference variance reduction capability, the CBS can greatly improve the FER even when pT and pR are equal to 0. The improvement becomes greater when pT increases but it does not change as much when pR increases. The asymmetric effect of the CBS on the transmitter and receiver correlations can be explained partly by the codeword competition problem occurring in the transmitter correlation case.

Figure 5 shows the FER of the same MIMO systems investigated in Figure 3, but with Ec/Ior set to -3 dB, G to 10 dB, and the number of allocated Walsh codes changed from 2 to 8 so that the effective code rate ranges from about 2/3 to about 1/6. As the baseline code rate of the turbo encoder is 1/3, the rate matching block carries out repetition and puncturing when the code rate is lower and higher than 1/3, respectively. Due to the interference variance reduction capability, the CBS brings out significant gains as the repetition rate increases. In such cases, the effective code rate decreases.

As discussed above, there are potential problems of independently encoded and spatially multiplexed MIMO transmission system when the channel column vectors become close. The extreme case that two or more streams have nearly the same instantaneous channel column vectors occurs with low probability in the practical channel, but it causes a codeword competition problem in the spatially-multiplexed MIMO systems once it occurs. Independent scrambling is applied to the coded and rate-matched bit sequence of one or more transmit streams to reduce the problem. Coded bit scrambling reduces the effective variance of the interstream interference in terms of the quality of the decoding path metric when the effective code rate becomes lower than the code rate of the baseline channel encoder. Performance improvement via the scrambling can be achieved in adaptive rate control based MIMO systems as well.

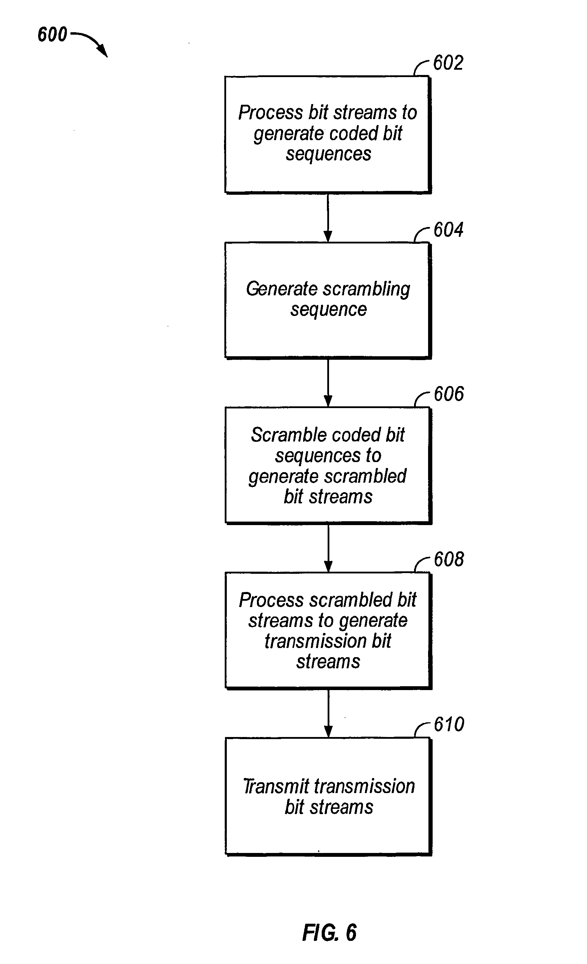

Figure 6 is a flow chart of a method 600 of transmitting information in a multi-input/multi-output system. At block 602, bit streams are processed to generate coded bit sequences. At block 604, scrambling sequences are generated, where different streams generate different scrambling sequences. At block 606, the coded bit sequences are scrambled to generate scrambled bit streams. At block 608, the scrambled bit streams are processed to generate transmission bit streams. Finally, at block 610, the transmission bit streams are transmitted.

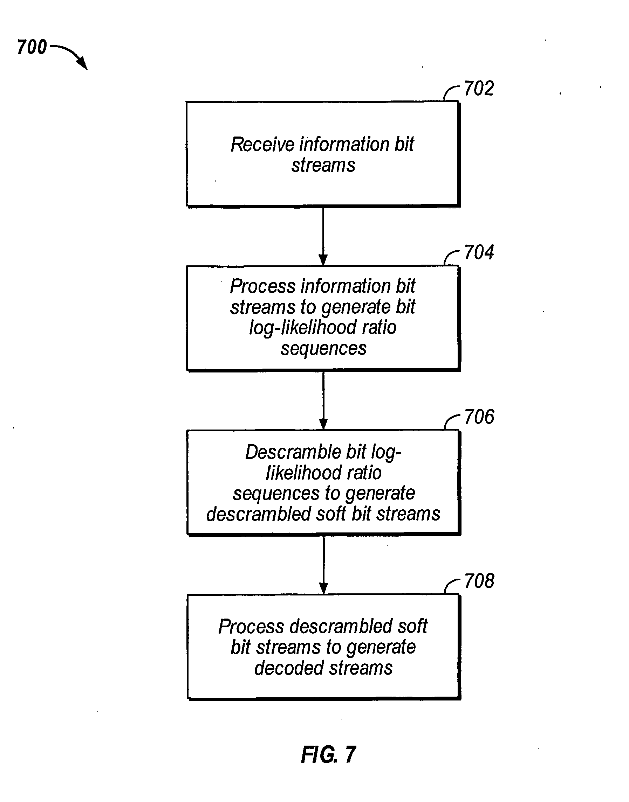

Figure 7 is a flow chart of a method 700 of receiving information in a multi-input/multi-output system. At block 702, information bit streams are received. At block 704, the information bit streams are processed to generate bit log-likelihood ratio sequences. At block 706, the bit log-likelihood ratio sequences are descrambled to generate descrambled soft bit streams. Finally, at block 708, the descrambled soft bit streams are processed to generate decoded bit streams.

Those of skill in the art would understand that information and signals can be represented using a variety of different technologies and techniques. For example, data, instructions, commands, information, signals, bits, symbols, and chips that can be referenced throughout the above description may be represented by voltages, currents, electromagnetic waves, magnetic fields or particles, optical fields or particles, or any combination thereof.

Those of skill in the art will further appreciate that the various illustrative logical blocks, modules, circuits, and algorithm steps described in connection with the embodiments disclosed herein can be implemented as electronic hardware, computer software, or combinations of both. To illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans can implement the described functionality in varying ways for each particular application, but such implementation decisions should not be interpreted as causing a departure from the scope of the present invention.

The various illustrative logical blocks, modules, and circuits described in connection with the embodiments disclosed herein can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor can be a microprocessor, but in the alternative, the processor can be any conventional processor, controller, microcontroller, or state machine. A processor can also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or other form of storage medium known in the art. A storage medium is coupled to the processor, such that the processor can read information from, and write information to, the storage medium. In the alternative, the storage medium can be integral to the processor. The processor and the storage medium can reside in an ASIC. The ASIC can reside in a user terminal. The processor and the storage medium can reside as discrete components in a user terminal.

The previous description of the disclosed embodiments is provided to enable a person skilled in the art to make or use the present invention. Various modifications to these embodiments will be readily apparent to those skilled in the art, and the generic principles defined herein can be applied to other embodiments without departing from the spirit or scope of the invention. Thus, the present invention is not intended to be limited to the embodiments shown herein but is to be accorded the widest scope consistent with the principles and novel features disclosed herein. Thus, the invention is limited only by the claims.

**Claims**

1.  An apparatus for a multi-stream multiple-input-multiple-output, referred to as MIMO, communication system, comprising:

    an encoder (108) for encoding a plurality of source bit streams (106) to produce a plurality of encoded bit streams, a bit stream processor for scrambling each of said encoded bit streams with a differently configured scrambler (114) to produce a plurality of differently scrambled bit streams, and
    a mapper (116) for mapping groups of bits of said plurality of differently scrambled bit streams into transmit symbols,
    wherein the bit stream processor further comprises a rate matcher (110) for rate matching the encoded bit streams.

2.  The apparatus of Claim 1, wherein the bit stream processor further comprises an interleaver (112) for interleaving each of said plurality of encoded bit streams (106).

3.  The apparatus of Claim 2, wherein the interleaver (112) interleaves the encoded bit streams prior to the scrambling of each of the encoded bit streams (106).

4.  The apparatus of Claim 2, wherein the interleaver (112) interleaves each of the scrambled bit streams.

5.  The apparatus of Claim 1, wherein the scrambling performs an exclusive- OR operation between different pseudo random scrambling sequences and the plurality of encoded bit streams.

6.  The apparatus of Claim 1, wherein said mapper (116) further maps groups of bits of said plurality of differently scrambled bit streams into transmit symbols based upon a predetermined modulation type to generate a plurality of symbol streams.

7.  The apparatus of Claim 6, wherein said modulation type comprises Quadrature Phase-Shift Keying (QPSK).

8.  The apparatus of Claim 6, wherein said modulation type comprises Quadrature Amplitude Modulation (QAM).

9.  The method of Claim 6, further comprising a spreader (118) for spreading the plurality of mapped symbol streams by a common subset of Walsh codes to generate a plurality of spread signals.

10. The apparatus of Claim 1, further comprising: a plurality of antennas (120) for transmitting the symbols over a wireless communication medium.

11. The apparatus of Claim 10, wherein said transmitting the symbols occurs over at least one of a code division multiple access (CDMA) or orthogonal frequency division multiple (OFDM) access system.

12. An apparatus for a multi-stream multiple-input-multiple-output, referred to as MIMO, communication system, comprising:

    an encoder (108) for encoding a plurality of source bit streams (106) to produce a plurality of encoded bit streams;
    a bit stream processor for interleaving each of the encoded bit streams with a different interleaving pattern to produce a plurality of differently interleaved bit streams; and
    a mapper (116) for mapping groups of bits of said plurality of differently interleaved bit streams into transmit symbols;
    wherein the bit stream processor further comprises a rate matcher (110) for rate matching the encoded bit streams.

13. An apparatus for a multi-stream multiple-input-multiple-output, referred to as MIMO, communication system, comprising:

> a demapper (128) for translating received symbols into bit groups and to produce a plurality of received bit streams;
> a bit stream processor for applying a different descrambling algorithm to each received bit stream to produce a plurality of differently descrambled bit streams; and
> a decoder (136) for decoding said differently descrambled bit streams to produce a plurality decoded bit streams wherein the bit stream processor further comprises a rate matcher (134) for rate matching the received bit streams.

14. The apparatus of Claim 13, wherein each descrambling algorithm removes a previously applied scrambling sequence.

15. The apparatus of Claim 13, further comprising:

> a space time equalizer (122) for generating soft chip sequences of the received symbols; and
> a despreader (126) for generating a plurality of soft symbol sequences.

16. The apparatus of Claim 15, wherein the demapper (128) further generates a plurality of bit log-likelihood ratio (LLR) sequences based at least in part upon said plurality of soft symbol sequences.

17. The apparatus of Claim 13, wherein said bitstream processor multiplies the received bit stream by a real-valued descrambling sequence comprising $\{1 - 2s_i(n)\}$, wherein $s_i(n)$) comprises an i-th binary pseudo random scrambling sequence.

18. An apparatus for a multi-stream multiple-input-multiple-output, referred to as MIMO, communication system, comprising:

> a demapper (128) for translating received symbols into bit groups and to produce a plurality of received bit streams;
> a bit stream processor for applying a different deinterleaving pattern to each received bit stream to produce a plurality of differently deinterleaved bit streams; and
> a decoder (136) for decoding said differently deinterleaved bit streams to produce a plurality decoded bit streams, wherein the bit stream processor further comprises a rate matcher (134) for rate matching the received bit streams.

19. A method for transmission of information in a multi-stream multiple input-multiple output, referred to as MIMO, communication system, comprising:

> encoding a plurality of source bit streams (106) to produce a plurality of encoded bit streams;
> rate matching the encoded bit streams;
> scrambling each of said encoded bit streams with a differently configured scrambler (114) to produce a plurality of differently scrambled bit streams; and mapping groups of bits of said plurality of differently scrambled bit streams into transmit symbols.

20. The method of Claim 19, further comprising interleaving each of said plurality of encoded bit streams.

21. The method of Claim 20, wherein said interleaving further comprises interleaving the encoded bit streams prior to the scrambling of each of the encoded bit streams.

22. The method of Claim 20, wherein said interleaving further comprises interleaving each of the scrambled bit streams.

23. The method of Claim 19, wherein the scrambling comprises performing an exclusive-OR operation between different pseudo random scrambling sequences and the plurality of encoded bit streams.

24. The method of Claim 19, wherein said mapping comprises mapping groups of bits of said plurality of differently scrambled bit streams are mapped into transmit symbols based upon a predetermined modulation type to generate a plurality of symbol streams.

25. The method of Claim 24, wherein said modulation type comprises Quadrature Phase-Shift Keying (QPSK).

26. The method of Claim 24, wherein said modulation type comprises Quadrature Amplitude Modulation (QAM).

27. The method of Claim 24, further comprising spreading the plurality of mapped symbol streams by a common subset of Walsh codes to generate a plurality of spread signals.

28. The method of Claim 29, further comprising transmitting the symbols over a wireless communication medium.

29. The method of Claim 28, wherein the transmitting the symbols occurs over at least one of a code division multiple access (CDMA) or orthogonal frequency division multiple (OFDM) access system.

30. A method for transmission of information in a multi-stream multiple input-multiple output, referred to MIMO, communication system, comprising:

encoding a plurality of source bit streams (106) to produce a plurality of encoded bit streams;
rate matching the encoded bit streams;interleaving each of the encoded bit streams with a different interleaving pattern to produce a plurality of differently interleaved bit streams; and
mapping groups of bits of said plurality of differently interleaved bit streams into transmit symbols.

31. A method for receiving information in a communication device for a multi-stream multiple-input-multiple-output, referred to as MIMO, communication system, comprising:

translating received symbols into bit groups and to produce a plurality of received bit streams;
applying a different descrambling algorithm to each received bit stream to produce a plurality of differently descrambled bit streams;
rate matching the descrambled bit streams; and
decoding said differently descrambled bit streams to produce a plurality decoded bit streams.

32. The method of Claim 31, wherein each descrambling algorithm removes a previously applied scrambling sequence.

33. The method of Claim 31, further comprising: generating soft chip sequences of the received symbols; and generating a plurality of soft symbol sequences.

34. The method of Claim 33, further comprising generating a plurality of bit log-likelihood ratio (LLR) sequences based at least in part upon said plurality of soft symbol sequences.

35. The method of Claim 31, further comprising multiplying the received bit stream by a real-valued descrambling sequence comprising $\{1 - 2si(n)\}$, wherein si(n) comprises an i-th binary pseudo random scrambling sequence.

36. A method for receiving information in a communication device for a multi-stream multiple-input-multiple-output, referred to as MIMO, communication system, comprising:

translating received symbols into bit groups and producing a plurality of received bit streams;
applying a different deinterleaving pattern to each received bit stream to produce a plurality of differently deinterleaved bit streams;
rate matching the deinterleaved bit streams; and
decoding said differently deinterleaved bit streams to produce a plurality decoded bit streams.

**Patentansprüche**

1. Eine Vorrichtung für ein Mehrfach-Strom-MIMO-Kommunikationssystem bzw. Multi-Stream-Kommunikationssystem mit mehreren Eingangs- und mehreren Ausgangsgrößen, was als MIMO bezeichnet wird (MIMO = multiple-input-multiple-output), die Folgendes aufweist:

einen Codierer (108) zum Codieren einer Vielzahl von Quellenbitströmen (106), um eine Vielzahl von codierten Bitströmen zu erzeugen;

einen Bitstromprozessor zum Scramblen bzw. Verwürfeln jedes der codierten Bitströme mit einem unterschiedlich konfigurierten Scrambler bzw. Verwürfler (114), um eine Vielzahl unterschiedlich gescrambleter bzw. verwürfelter Bitströme zu erzeugen, und

eine Abbildungsvorrichtung bzw. einen Mapper (116) zum Abbilden von Gruppen von Bits der Vielzahl unterschiedlich verwürfelter Bitströme in Sendesymbole,

wobei der Bitstromprozessor weiter ein Ratenabgleichelement (110) zum Abgleichen der Rate der codierten Bitströme aufweist.

2. Vorrichtung nach Anspruch 1, wobei der Bitstromprozessor weiter einen Verschachteler bzw. Interleaver (112) zum Verschachteln bzw. Interleaven jedes der Vielzahl von codierten Bitströmen (106) aufweist.

3. Vorrichtung nach Anspruch 2, wobei der Verschachteler (112) die codierten Bitströme vor dem Verwürfeln jedes der codierten Bitströme (106) verschachtelt.

4. Vorrichtung nach Anspruch 2, wobei der Verschachteler (112) jeden der verwürfelten Bitströme verschachtelt.

5. Vorrichtung nach Anspruch 1, wobei das Verwürfeln eine Exklusiv-ODER-Operation zwischen unterschiedlichen pseudozufälligen Verwürfelungssequenzen und der Vielzahl von codierten Bitströmen durchführt.

6. Vorrichtung nach Anspruch 1, wobei die Abbildungsvorrichtung (116) weiter Gruppen von Bits der Vielzahl unterschiedlich verwürfelter Bitströme basierend auf einem vorbestimmten Modulationstyp in Sendesymbole abbildet, um eine Vielzahl von Symbolströmen zu generieren.

7. Vorrichtung nach Anspruch 6, wobei der Modulationstyp Quadraturphasenumtastung bzw. Quadrature Phase-Shift Keying (QPSK) aufweist.

8. Vorrichtung nach Anspruch 6, wobei der Modulationstyp Quadraturamplitudenmodulation bzw. Quadrature Amplitude Modulation (QAM) aufweist.

9. Verfahren nach Anspruch 6, das weiter einen Spreizer (118) aufweist zum Spreizen der Vielzahl von abgebildeten Symbolströmen mit einem gemeinsamen Untersatz von Walsh-Codes, um eine Vielzahl von gespreizten Signalen zu generieren.

10. Vorrichtung nach Anspruch 1, die weiter Folgendes aufweist: eine Vielzahl von Antennen (120) zum Senden der Symbole über ein Drahtloskommunikationsmedium.

11. Vorrichtung nach Anspruch 10, wobei das Senden der Symbole über ein Codemultiplex-Vielfachzugriffssystem bzw. CDMA-System (CDMA = code division multiple access) und/oder ein Orthogonalfrequenz-Vielfachzugriffssystem bzw. OFDM-Zugriffssystem (OFDM = orthogonal frequency division multiple) auftritt.

12. Eine Vorrichtung für ein Mehrfach-Strom-MIMO-Kommunikationssystem bzw. Multi-Stream-Kommunikationssystem mit mehreren Eingangs- und mehreren Ausgangsgrößen, was als MIMO bezeichnet wird (MIMO = multiple-input-multiple-output), die Folgendes aufweist:

einen Codierer (108) zum Codieren einer Vielzahl von Quellenbitströmen (106), um eine Vielzahl von codierten Bitströmen zu erzeugen;

einen Bitstromprozessor zum Interleaven bzw. Verschachteln jedes der codierten Bitströme mit einem unterschiedlichen Verschachtelungsmuster, um eine Vielzahl unterschiedlich verschachtelter Bitströme zu erzeugen, und

eine Abbildungsvorrichtung bzw. einen Mapper (116) zum Abbilden von Gruppen von Bits der Vielzahl unterschiedlich verschachtelter Bitströme in Sendesymbole,

wobei der Bitstromprozessor weiter ein Ratenabgleichelement (110) zum Abgleichen der Rate der codierten Bitströme aufweist.

13. Eine Vorrichtung für ein Mehrfach-Strom-MIMO-Kommunikationssystem bzw. Multi-Stream-Kommunikationssystem mit mehreren Eingangs- und mehreren Ausgangsgrößen, was als MIMO bezeichnet wird (MIMO = multiple-input-multiple-output), die Folgendes aufweist:

ein Rückabbildungselement bzw. einen Demapper (128) zum Übersetzen empfangener Symbole in Bitgruppen und zum Erzeugen einer Vielzahl von empfangenen Bitströmen;
einen Bitstromprozessor zum Anwenden eines unterschiedlichen Entwürfelungs- bzw. Descrambling-Algorithmus auf jeden empfangenen Bitstrom, um eine Vielzahl unterschiedlich entwürfelter Bitströme zu erzeugen; und
einen Decodierer (136) zum Decodieren der unterschiedlich entwürfelten Bitströme, um eine Vielzahl decodierter Bitströme zu erzeugen, wobei der Bitstromprozessor weiter ein Ratenabgleichelement (134) zum Abgleichen der Rate der empfangenen Bitströme aufweist.

14. Vorrichtung nach Anspruch 13, wobei jeder Descrambling bzw. Entwürfelungs-Algorithmus eine zuvor angewendete Verwürfelungssequenz entfernt.

15. Vorrichtung nach Anspruch 13, die weiter Folgendes aufweist:

einen Raum-Zeit-Equalizer (122) zum Generieren von Soft-Chip-Sequenzen der empfangenen Symbole; und
einen Entspreizer bzw. Despreader (126) zum Generieren einer Vielzahl von Soft-Symbol-Sequenzen.

16. Vorrichtung nach Anspruch 15, wobei das Rückabbildungselement (128) weiter eine Vielzahl von Bit-LLR-Sequenzen (LLR = log-likelihood ratio) zumindest teilweise basierend auf der Vielzahl von Soft-Symbol-Sequenzen generiert.

17. Vorrichtung nach Anspruch 13, wobei der Bitstromprozessor den empfangenen Bitstrom mit einer reell-wertigen Entwürfelungssequenz multipliziert, die {1-2si(n)} aufweist, wobei si(n) eine i-te binäre pseudozufällige Verwürfelungssequenz aufweist.

18. Eine Vorrichtung für ein Mehrfach-Strom-MIMO-Kommunikationssystem bzw. Multi-Stream-Kommunikationssystem mit mehreren Eingangs- und mehreren Ausgangsgrößen, was als MIMO bezeichnet wird (MIMO = multiple-input-multiple-output), die Folgendes aufweist:

ein Rückabbildungselement (128) zum Übersetzen empfangener Symbole in Bitgruppen und zum Erzeugen einer Vielzahl von empfangenen Bitströmen;
einen Bitstromprozessor zum Anwenden eines unterschiedlichen Deinterleaving- bzw. Entschachtelungsmusters auf jeden empfangenen Bitstrom, um eine Vielzahl unterschiedlich entschachtelter bzw. deinterleavter Bitströme zu erzeugen; und
einen Decodierer (136) zum Decodieren der unterschiedlich entschachtelten Bitströme, um eine Vielzahl decodierter Bitströme zu erzeugen, wobei der Bitstromprozessor weiter ein Ratenabgleichelement (134) zum Abgleichen der Rate der empfangenen Bitströme aufweist.

19. Ein Verfahren zum Senden von Information in einem Mehrfach-Strom-MIMO-Kommunikationssystem bzw. Multi-Stream-Kommunikationssystem mit mehreren Eingangs- und mehreren Ausgangsgrößen, was als MIMO bezeichnet wird (MIMO = multiple-input-multiple-output), das Folgendes aufweist:

Codieren einer Vielzahl von Quellenbitströmen (106), um eine Vielzahl von codierten Bitströmen zu erzeugen;
Abgleichen der Raten der codierten Bitströme;
Verwürfeln jedes der codierten Bitströme mit einem unterschiedlich konfigurierten Verwürfeler (114), um eine Vielzahl von unterschiedlich verwürfelten Bitströmen zu erzeugen; und
Abbilden bzw. Mapping von Gruppen von Bits der Vielzahl von unterschiedlich verwürfelten Bitströmen in Sendesymbole.

20. Verfahren nach Anspruch 19, das weiter das Interleaven bzw. Verschachteln jedes der Vielzahl von codierten Bitströmen aufweist.

21. Verfahren nach Anspruch 20, wobei das Verschachteln weiter das Verschachteln der codierten Bitströme vor dem Verwürfeln jedes der codierten Bitströme aufweist.

22. Verfahren nach Anspruch 20, wobei das Verschachteln weiter das Verschachteln eines jeden der verwürfelten Bitströme aufweist.

23. Verfahren nach Anspruch 19, wobei das Verwürfeln das Durchführen einer Exklusiv-ODER-Operation zwischen unterschiedlichen pseudozufälligen Verwürfelungssequenzen und der Vielzahl von codierten Bitströmen aufweist.

24. Verfahren nach Anspruch 19, wobei das Abbilden bzw. Mapping das Abbilden von Gruppen von Bits der Vielzahl unterschiedlich verwürfelter Bitströme auf Sendesymbole basierend auf einem vorbestimmten Modulationstyp aufweist, um eine Vielzahl von Symbolströmen zu generieren.

25. Verfahren nach Anspruch 24, wobei der Modulationstyp Quadraturphasenumtastung (QPSK) aufweist.

26. Verfahren nach Anspruch 24, wobei der Modulationstyp Quadraturamplitudenmodulation (QAM) aufweist.

27. Verfahren nach Anspruch 24, das weiter das Spreizen der Vielzahl von abgebildeten Symbolströmen mit einem gemeinsamen Untersatz von Walsh-Codes aufweist, um eine Vielzahl von gespreizten Signalen zu generieren.

28. Verfahren nach Anspruch 29, das weiter das Senden der Symbole über ein Drahtloskommunikationsmedium aufweist.

29. Verfahren nach Anspruch 28, wobei das Senden der Symbole über ein CDMA-System (CDMA = code division multiple access) und/oder ein OFDM-Zugriffssystem (OFDM = orthogonal frequency division multiple) auftritt.

30. Ein Verfahren zum Senden von Information in einem Mehrfach-Strom-MIMO-Kommunikationssystem bzw. Multi-Stream-Kommunikationssystem mit mehreren Eingangs- und mehreren Ausgangsgrößen, was als MIMO bezeichnet wird (MIMO = multiple-input-multiple-output), das Folgendes aufweist:

   Codieren einer Vielzahl von Quellenbitströmen (106), um eine Vielzahl von codierten Bitströmen zu erzeugen;
   Abgleichen der Raten der codierten Bitströme;
   Verschachteln bzw. Interleaven jedes der codierten Bitströme mit einem unterschiedlichen Verschachtelungsmuster, um eine Vielzahl von unterschiedlich verschachtelten Bitströmen zu erzeugen; und
   Abbilden bzw. Mapping von Gruppen von Bits der Vielzahl unterschiedlich verschachtelter Bitströme in Sendesymbole.

31. Ein Verfahren zum Empfangen von Information in einer Kommunikationsvorrichtung für ein Mehrfach-Strom-MIMO-Kommunikationssystem bzw. Multi-Stream-Kommunikationssystem mit mehreren Eingangs- und mehreren Ausgangsgrößen, was als MIMO bezeichnet wird (MIMO = multiple-input-multiple-output), das Folgendes aufweist:

   Übersetzen von empfangenen Symbolen in Bitgruppen und um eine Vielzahl von empfangenen Bitströmen zu erzeugen;
   Anwenden eines unterschiedlichen Entwürfelungs- bzw. Descrambling-Algorithmus auf jeden empfangenen Bitstrom, um eine Vielzahl von unterschiedlich entwürfelten Bitströmen zu erzeugen;
   Abgleichen der Raten der entwürfelten Bitströme; und
   Decodieren der unterschiedlich entwürfelten Bitströme, um eine Vielzahl von decodierten Bitströmen zu erzeugen.

32. Verfahren nach Anspruch 31, wobei der Entwürfelungsalgorithmus eine zuvor angewendete Verwürfelungssequenz entfernt.

33. Verfahren nach Anspruch 31, das weiter Folgendes aufweist: Generieren von Soft-Chip-Sequenzen der empfangenen Symbole; und Generieren einer Vielzahl von Soft-Symbol-Sequenzen.

34. Verfahren nach Anspruch 33, das weiter das Generieren einer Vielzahl von Bit-LLR-Sequenzen (LLR = log-likelihood ratio) zumindest teilweise basierend auf der Vielzahl von Soft-Symbol-Sequenzen aufweist.

35. Verfahren nach Anspruch 31, das weiter das Multiplizieren der empfangenen Bitströme mit einer reell-wertigen Entwürfelungssequenz aufweist, die $\{1-2s_i(n)\}$ aufweist, wobei $s_i(n)$ eine i-te binäre pseudozufällige Verwürfelungssequenz aufweist.

36. Ein Verfahren zum Empfangen von Information in einer Kommunikationsvorrichtung für ein Mehrfach-Strom-MIMO-Kommunikationssystem bzw. Multi-Stream-Kommunikationssystem mit mehreren Eingangs- und mehreren Ausgangsgrößen, was als MIMO bezeichnet wird (MIMO = multiple-input-multiple-output), das Folgendes aufweist:

Übersetzen von empfangenen Symbolen in Bitgruppen und Erzeugen eine Vielzahl von empfangenen Bitströmen;
Anwenden eines unterschiedlichen Entschachtelungs- bzw. Deinterleaving-Musters auf jeden empfangenen Bitstrom, um eine Vielzahl von unterschiedlich entschachtelten Bitströmen zu erzeugen;
Abgleichen der Raten der entschachtelten Bitströme; und
Decodieren der unterschiedlich entschachtelten Bitströme, um eine Vielzahl von decodierten Bitströmen zu erzeugen.

**Revendications**

1. Dispositif pour un système de communication multi-flux à entrées multiples et à sorties multiples, appelé MIMO, comprenant :

   un codeur (108) pour coder une pluralité de flux de bits sources (106) pour produire une pluralité de flux de bits codés,
   un processeur de flux de bits pour brouiller chacun des flux de bits codés à l'aide d'un brouilleur configuré différemment (114) pour produire une pluralité de flux de bits brouillés différemment, et
   un dispositif de mappage (116) pour mapper des groupes de bits de la pluralité de flux de bits brouillés différemment en symboles d'émission,
   dans lequel le processeur de flux de bits comprend en outre un adaptateur de débit (110) pour adapter le débit des flux de bits codés.

2. Dispositif selon la revendication 1, dans lequel le processeur de flux de bits comprend en outre un entrelaceur (112) pour entrelacer chacun de la pluralité de flux de bits codés (106).

3. Dispositif selon la revendication 2, dans lequel l'entrelaceur (112) entrelace les flux de bits codés avant le brouillage de chacun des flux de bits codés (106).

4. Dispositif selon la revendication 2, dans lequel l'entrelaceur (112) entrelace chacun des flux de bits brouillés.

5. Dispositif selon la revendication 1, dans lequel le brouillage exécute une opération de OU-Exclusif entre différentes séquences de brouillage pseudo-aléatoires et la pluralité de flux de bits codés.

6. Dispositif selon la revendication 1, dans lequel le dispositif de mappage (116) mappe en outre des groupes de bits de la pluralité de flux de bits brouillés différemment en symboles d'émission sur la base d'un type de modulation prédéterminé pour générer une pluralité de flux de symboles.

7. Dispositif selon la revendication 6, dans lequel le type de modulation comprend la Modulation par Décalage de Phase en Quadrature (QPSK).

8. Dispositif selon la revendication 6, dans lequel le type de modulation comprend la Modulation d'Amplitude en Quadrature (QAM).

9. Dispositif selon la revendication 6, comprenant en outre un dispositif d'étalement (118) pour étaler la pluralité de flux de symboles mappés par un sous-ensemble commun de codes de Walsh pour générer une pluralité de signaux étalés.

10. Dispositif selon la revendication 1, comprenant en outre une pluralité d'antennes (120) pour émettre les symboles sur un support de communication sans fil.

11. Dispositif selon la revendication 10, dans lequel l'émission des symboles se produit sur au moins l'un d'un système à accès multiple par différence de code (CDMA) ou un système à accès multiple par séparation fréquentielle orthogonale (OFDM).

12. Dispositif pour un système de communication multi-flux à entrées multiples et à sorties multiples, appelé MIMO, comprenant :

un codeur (108) pour coder une pluralité de flux de bits sources (106) pour produire une pluralité de flux de bits codés ;
un processeur de flux de bits pour entrelacer chacun des flux de bits codés avec un motif d'entrelacement différent pour produire une pluralité de flux de bits entrelacés différemment ; et
un dispositif de mappage (116) pour mapper des groupes de bits de la pluralité de flux de bits entrelacés différemment en symboles d'émission ;
dans lequel le processeur de flux de bits comprend en outre un adaptateur de débit (110) pour adapter le débit des flux de bits codés.

13. Dispositif pour un système de communication multi-flux à entrées multiples et à sorties multiples, appelé MIMO, comprenant :

un dispositif de démappage (128) pour traduire des symboles reçus en groupes de bits et pour produire une pluralité de flux de bits reçus ;
un processeur de flux de bits pour appliquer un algorithme de désembrouillage différent à chaque flux de bits reçu pour produire une pluralité de flux de bits désembrouillés différemment ; et
un décodeur (136) pour décoder les flux de bits désembrouillés différemment pour produire une pluralité de flux de bits décodés, le processeur de flux de bits comprenant en outre un adaptateur de débit (134) pour adapter le débit des flux de bits reçus.

14. Dispositif selon la revendication 13, dans lequel chaque algorithme de désembrouillage retire une séquence de brouillage appliquée précédemment.

15. Dispositif selon la revendication 13, comprenant en outre :

un égaliseur spatio-temporel (122) pour générer des séquences d'éléments de code non stricts des symboles reçus ; et
un dispositif de désétalement (126) pour générer une pluralité de séquences de symboles non stricts.

16. Dispositif selon la revendication 15, dans lequel le dispositif de démappage (128) génère en outre une pluralité de séquences de rapports de probabilité logarithmique (LLR) de bits sur la base au moins en partie de la pluralité de séquences de symboles non stricts.

17. Dispositif selon la revendication 13, dans lequel le processeur de flux de bits multiplie le flux de bits reçu par une séquence de désembrouillage à valeurs réelles comprenant {1-2si(n)}, si(n) comprenant une i-ème séquence de brouillage pseudo-aléatoire binaire.

18. Dispositif pour un système de communication multi-flux à entrées multiples et à sorties multiples, appelé MIMO, comprenant :

un dispositif de démappage (128) pour traduire des symboles reçus en groupes de bits et pour produire une pluralité de flux de bits reçus ;
un processeur de flux de bits pour appliquer un motif de désentrelacement différent à chaque flux de bits reçu pour produire une pluralité de flux de bits désentrelacés différemment ; et
un décodeur (136) pour décoder les flux de bits désentrelacés différemment pour produire une pluralité de flux de bits décodés, le processeur de flux de bits comprenant en outre un adaptateur de débit (134) pour adapter le débit des flux de bits reçus.

19. Procédé pour la transmission d'informations dans un système de communication multi-flux à entrées multiples et à sorties multiples, appelé MIMO, comprenant les étapes suivantes :

coder une pluralité de flux de bits sources (106) pour produire une pluralité de flux de bits codés ;
adapter le débit des flux de bits codés ;
brouiller chacun des flux de bits codés avec un dispositif de brouillage (114) configuré différemment pour produire une pluralité de flux de bits brouillés différemment ; et
mapper des groupes de bits de la pluralité de flux de bits brouillés différemment en symboles d'émission.

**20.** Procédé selon la revendication 19, comprenant en outre un entrelacement de chacun de la pluralité de flux de bits codés.

**21.** Procédé selon la revendication 20, dans lequel l'entrelacement comprend en outre l'entrelacement des flux de bits codés avant le brouillage de chacun des flux de bits codés.

**22.** Procédé selon la revendication 20, dans lequel l'entrelacement comprend en outre un entrelacement de chacun des flux de bits brouillés.

**23.** Procédé selon la revendication 19, dans lequel le brouillage comprend l'exécution d'une opération de OU-Exclusif entre différentes séquences de brouillage pseudo-aléatoires et la pluralité de flux de bits codés.

**24.** Procédé selon la revendication 19, dans lequel le mappage comprend le mappage de groupes de bits de la pluralité de flux de bits brouillés différemment qui sont mappés en symboles d'émission sur la base d'un type de modulation prédéterminé pour générer une pluralité de flux de bits.

**25.** Procédé selon la revendication 24, dans lequel le type de modulation comprend la Modulation par Décalage de Phase en Quadrature (QPSK).

**26.** Procédé selon la revendication 24, dans lequel le type de modulation comprend la Modulation d'Amplitude en Quadrature (QAM).

**27.** Procédé selon la revendication 24, comprenant en outre l'étalement de la pluralité de flux de symboles par un sous-ensemble commun de codes de Walsh pour générer une pluralité de signaux étalés.

**28.** Procédé selon la revendication 29, comprenant en outre l'émission de symboles sur un support de communication sans fil.

**29.** Procédé selon la revendication 28, dans lequel la transmission des symboles se fait sur au moins l'un d'un système à accès multiple par différence de code (CDMA) ou un système à accès multiple par séparation fréquentielle orthogonale (OFDM).

**30.** Procédé de transmission d'informations dans un système de communication multi-flux à entrées multiples et à sorties multiples, appelé MIMO, comprenant les étapes suivantes :

coder une pluralité de flux de bits sources (106) pour produire une pluralité de flux de bits codés ; adapter le débit des flux de bits codés ; entrelacer chacun des flux de bits codés avec un motif d'entrelacement différent pour produire une pluralité de flux de bits entrelacés différemment ; et mapper des groupes de bits de la pluralité de flux de bits entrelacés différemment en symboles d'émission.

**31.** Procédé pour recevoir des informations dans un dispositif de communication pour un système de communication multi-flux à entrées multiples et à sorties multiples, appelé MIMO, comprenant les étapes suivantes :

traduire des symboles reçus en groupes de bits et produire une pluralité de flux de bits reçus ; appliquer un algorithme de désembrouillage différent à chaque flux de bits reçu pour produire une pluralité de flux de bits désembrouillés différemment ; adapter le débit des flux de bits désembrouillés ; et décoder les flux de bits désembrouillés différemment pour produire une pluralité de flux de bits décodés.

**32.** Procédé selon la revendication 31, dans lequel chaque algorithme de désembrouillage retire une séquence de brouillage appliquée précédemment.

**33.** Procédé selon la revendication 31, comprenant en outre la génération de séquences d'éléments non stricts des symboles reçus ; et la génération d'une pluralité de séquences de symboles non stricts.

**34.** Procédé selon la revendication 33, comprenant en outre la génération d'une pluralité de séquences de rapports de probabilité logarithmique (LLR) de bits sur la base au moins en partie de la pluralité de séquences de symboles non stricts.

**35.** Procédé selon la revendication 31, comprenant en outre la multiplication du flux de bits reçu par une séquence de désembrouillage à valeurs réelles comprenant {1-2si(n)}, si (n) comprenant une i-ème séquence de brouillage pseudo-aléatoire binaire.

**36.** Procédé de réception d'informations dans un dispositif de communication pour un système de communication multi-flux à entrées multiples et à sorties multiples, appelé MIMO, comprenant les étapes suivantes :

traduire des symboles reçus en groupe de bits et produire une pluralité de flux de bits reçus ;
appliquer un motif de désentrelacement différent à chaque flux de bits reçu pour produire une pluralité de flux de bits désentrelacés différemment ;
adapter le débit des flux de bits désentrelacés ; et
décoder les flux de bits désentrelacés différemment pour produire une pluralité de flux de bits décodés.

EP 1 782 592 B1

FIG. 1A

EP 1 782 592 B1

*102*    *116*    *118*    *120*

(A) → Mapper → $X_0(k)$ → Spreader → ▽

Allocated Subset of Walsh Codes

$X_{M-1}(k)$

(B) → Mapper → Spreader → ▽

*Tx*

**FIG. 1A**
*(Continued)*

*132*    *134*    *136*    *138*

(C) → Deinterleaver → Rate Matching → Decoder → Decoded Bit Stream 0

(D) → Deinterleaver → Rate Matching → Decoder → Decoded Bit Stream M-1

FIG. 1B

EP 1 782 592 B1

FIG. 1B
(Continued)

102   116   118   120

(A) → Mapper → $X_0(k)$ → Spreader → Tx

Allocated Subset of Walsh Codes

$X_{M-1}(k)$

(B) → Mapper → Spreader

130   134   136   138

(C) → ⊗ → Rate Matching → Decoder → Decoded Bit Stream 0

$1-2\ S_0(n)$

(D) → ⊗ → Rate Matching → Decoder → Decoded Bit Stream M-1

$1-2\ S_{M-1}(n)$

EP 1 782 592 B1

FIG. 1C

FIG. 1C
(Continued)

EP 1 782 592 B1

**FIG. 2**

**FIG. 3**

**FIG. 4**

**FIG. 5**

600

602

Process bit streams to
generate coded bit
sequences

604

Generate scrambling
sequence

606

Scramble coded bit
sequences to
generate scrambled
bit streams

608

Process scrambled bit
streams to generate
transmission bit
streams

610

Transmit transmission
bit streams

FIG. 6

700 ⟍

┌─────────────────────────────┐ ⌐702
│                             │
│   Receive information bit   │
│          streams            │
│                             │
└─────────────────────────────┘
              │
              ▼
┌─────────────────────────────┐ ⌐704
│   Process information bit    │
│    streams to generate bit   │
│      log-likelihood ratio    │
│          sequences           │
└─────────────────────────────┘
              │
              ▼
┌─────────────────────────────┐ ⌐706
│     Descramble bit log-      │
│        likelihood ratio      │
│    sequences to generate     │
│  descrambled soft bit streams│
└─────────────────────────────┘
              │
              ▼
┌─────────────────────────────┐ ⌐708
│   Process descrambled soft   │
│    bit streams to generate   │
│       decoded streams        │
└─────────────────────────────┘

*FIG. 7*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003021355 A
- WO 2004038951 A
- WO 2004039011 A
- WO 03085875 A